**Europäisches Patentamt**

**European Patent Office**

**Office européen des brevets**

(19)

(11) Numéro de publication: **0 032 759**
**A2**

## (12) DEMANDE DE BREVET EUROPEEN

(21) Numéro de dépôt: **81200011.5**

(22) Date de dépôt: **07.01.81**

(51) Int. Cl.³: **B 60 C 25/06**

---

(30) Priorité: **17.01.80 BE 58340**

(43) Date de publication de la demande: **29.07.81**
**Bulletin 81/30**

(84) Etats contractants désignés: **DE FR IT**

(71) Demandeur: **Du Quesne, Francis, Cleistraat 138, B-2630 Aartselaar (BE)**

(72) Inventeur: **Du Quesne, Francis, Cleistraat 138, B-2630 Aartselaar (BE)**

(74) Mandataire: **Ottelohe, Jozef René, Bureau Ottelohe J.R. Postbus 3 Fruithoflaan 105, B-2600 Antwerpen (Berchem) (BE)**

---

(54) **Dispositif pour la manipulation de roues et de pneus dans un appareil pour le montage et le démontage de pneus.**

(57) L'invention concerne un dispositif pour la manipulation de roues et de pneus dans un appareil pour le montage et le démontage de pneus.

Entre le berceau basculant (2) et la partie fixe (1) du dispositif, il est prévu un moyen (11 à 18) permettant, en position du travail, le déplacement du berceau (2) de la position horizontale vers la position verticale mais empêchant le déplacement du berceau (2) vers la position horizontale et permettant, en non-position de travail du moyen précité (11 à 18), le déplacement du berceau (2) en deux directions opposées.

0032759

- 1 -

Dispositif pour la manipulation de roues et de pneus dans un appareil pour le montage et le démontage de pneus.

---

L'invention concerne un dispositif pour amener d'une position verticale vers une position horizontale une roue et/ou un pneu au-dessus d'une tête de fixation rotative d'un appareil pour le montage et le démontage de pneus, pour déplacer vers le haut le pneu sur la roue fixée sur la tête précitée afin de pouvoir démonter le talon inférieur du pneu par l'outil de démontage et pour amener le pneu, démonté ou monté sur une roue, de la position horizontale vers la position verticale afin de pouvoir les rouler et les écarter du dispositif.

On connaît un dispositif comportant un berceau basculant en forme de U, sur lequel, en position verticale du berceau on roule la roue et/ou le pneu et en position horizontale du berceau la roue et/ou le pneu sont posés au-dessus de la tête de fixation rotative de l'appareil à monter et démonter et destinée à fixer la roue pour le montage ou le démontage de pneus. Ce dispositif est pourvu de cylindres pneumatiques ou hydrauliques pour déplacer verticalement vers le haut le pneu sur la roue fixée, afin de pouvoir démonter aussi le talon inférieur du pneu par l'outil de démontage de l'appareil à monter et démonter. Après que le pneu est monté ou démonté, en entraînant la tête de fixation rotative sous l'outil de montage ou de démontage de l'appareil précité, le berceau est basculé à nouveau vers sa position verticale, de sorte que la roue et/ou le pneu puissent être écartés du sispositif sans qu'il soit nécessaire de soulever à la main la roue et/ou le pneu.

Les cylindres pneumatiques ou hydrauliques ne présentent non seulement l'incovénient d'influencer sensiblement le prix de fabrication du dispositif mais en outre ils présentent l'inconvénient d'un fonctionnement par à-coups lorsqu'un pneu reste coller à la roue, de sorte que le dispositif et le pneu pourraient être endommagés.

Afin de rémédier à ces inconvénients et de réaliser un dispositif très simple, il est prévu selon la caractéristique essentielle de l'invention, entre le berceau basculant et la partie fixe du dispositif un moyen permettant en position de travail le déplacement du berceau de la position horizontale vers la position verticale mais empêchant le déplacement du berceau vers la position horizontale et permettant, en non-position de travail du moyen précité, le déplacement du berceau en deux directions opposées.

Ce dispositif permet donc de faire basculer une roue et/ou un pneu sans le moindre effort au-dessus de la tête de fixation rotative de l'appareil à monter et démonter, de déplacer vers le haut le pneu sur la roue pour le démontage du talon inférieur du pneu sans que celui-ci puisse redescendre et de placer sans effort la roue et/ou le pneu de nouveau dans une position verticale.

A titre d'exemple et sans le moindre caractère limitatif, il est donné ci-dessous une description plus complète d'une forme d'exécution préférentielle du dispositif conforme à la présente invention. Cette description se réfère aux dessins annexés dans lesquels :

les figures 1 et 2 représentent schématiquement le dispositif en différentes positions;

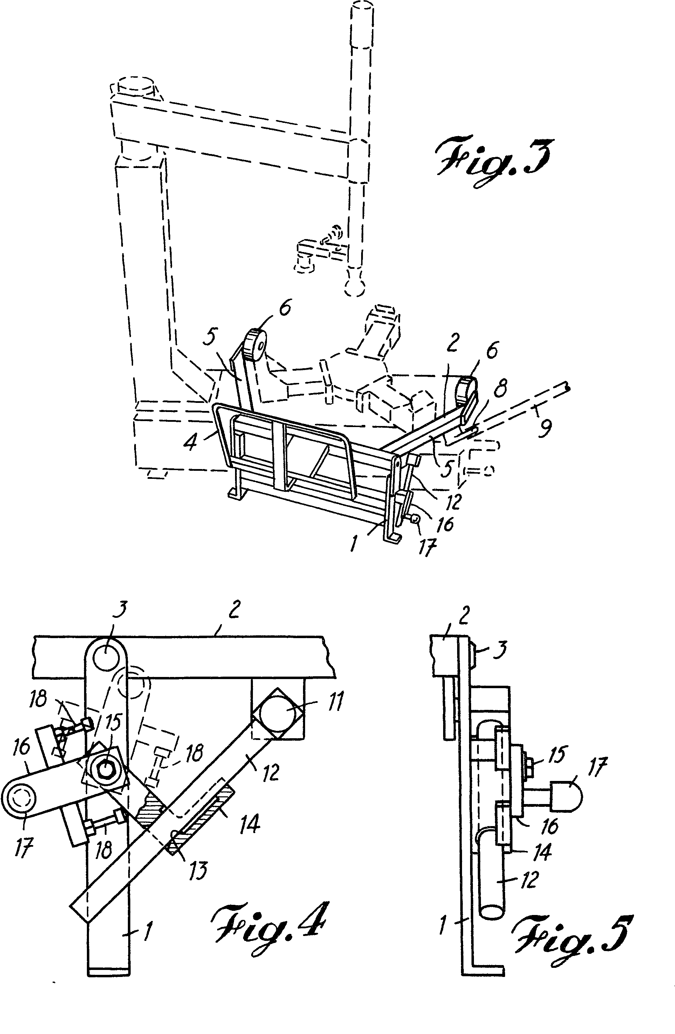

la figure 3 représente une vue en perspective du dispositif;

la figure 4 représente une vue agrandie du moyen prévu entre le berceau et la partie fixe du dispositif;

la figure 5 représente une vue latérale du moyen tel que représenté dans la figure 4.

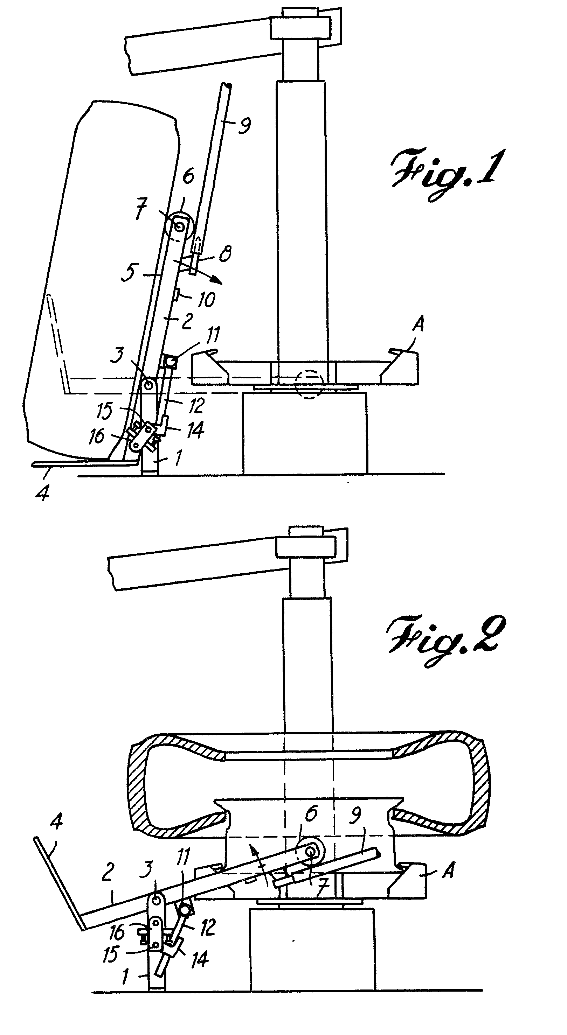

Dans ces figures on remarque que ce dispositif comporte un support fixe 1 placé sur le sol et auquel est suspendu à pivotement un berceau basculant 2 en forme de U, par l'intermédiaire de pivots 3. Ce berceau comporte une base 4 sur laquelle on roule le pneu et un dos 5 supportant le flanc du pneu, le berceau pouvant être déplacé entre un plan vertical et horizontal. A chaque extrémité libre du berceau basculant 2 il est prévu une roulette 6 pouvant tourner autour d'un pivot 7 fixé sur le berceau. Ces deux roulettes sont destinées à supporter le flanc du pneu à manipuler et à déplacer vers le haut le pneu sur la roue. Sur le berceau est fixé d'une part un ergot 8 sur lequel est glissé un levier amovible 9 destiné au basculement du berceau 2 et d'autre part une butée 10 pour limiter la position extrême horizontale du berceau. Au dos 5 du berceau 2 est suspendu à pivotement et par l'intermédiaire d'un pivot 11, une tige de guidage 12 pouvant coulisser et être coincée dans un passage 13 d'une glissière 14 suspendue à pivotement par l'intermédiaire d'un pivot 15 au support 1. Au même pivot 15 est suspendu à pivotement un contre-poids 16 pourvu d'une poignée 17 et de deux butées règlables 18 coopérant avec la glissière 14 et limitant les deux positions extrêmes du contre-poids dans lesquelles celui-ci peut être placé. Lorsque le contre-poids 16 se trouve dans la position de repos telle que représentée dans la figure 4, l'axe du passage 13 de la glissière 14 coïncide avec l'axe de la tige de guidage 12, de sorte que la tige 12 puisse se déplacer dans la glissière 14 en deux directions et le berceau 2 puisse être basculé en deux directions. Par contre, lorsque le contre-poids 16 se trouve dans la position de travail, telle que représentée dans la figure 4 en pointillé, donc avec la butée réglable 18 en contact avec la glissière 14, celui-ci se déplace sous le poids du contre-poids 16 sous un angle par rapport à la tige de guidage 12, ce qui provoque un coinçage de la tige 12 dans le passage 13 de la glissière 14. Dans cette position la tige 12 peut se déplacer vers le haut mais pas de haut en bas. On peut donc basculer le berceau 2 d'une position horizontale vers une position verticale et bloquer ce berceau 2 dans n'importe quelle position atteinte. Le dispositif décrit ci-devant est monté de telle manière dans un appareil à monter et démonter les pneus, que l'axe des deux roulettes 6 soit situé tout près de la ligne de centre de la tête de fixation de l'appareil précité, ce qui facilite non seulement la rotation du pneu sur les roulettes 6 sous l'outil de montage et de démontage, mais donne aussi un appui efficace au pneu à deux endroits diamètralement opposés. Lorsque par exemple une roue avec pneu doit être déposée sur la tête de fixation d'un appareil à monter et démonter, le dispositif se trouve dans la position telle que représentée dans la figure 1. On roule maintenant la roue avec pneu sur la base 4 du berceau basculant 2 de sorte que le flanc du pneu repose contre les roulettes 6 du berceau, on glisse le levier amovible sur l'ergot 8 du berceau 2 et l'on bascule le berceau 2 par l'intermédiaire du levier 9 vers la position horizontale jusqu'à ce que la roue et le pneu se trouvent sur la tête de fixation A de l'appareil à monter et démonter. Pendant ce mouvement, la tige de guidage 12 s'est déplacé librement vers le bas dans le passage 13 de la glissière 14. Après que la roue est fixée entre les mâchoirs de la tête de fixation A, on fait tourner la tête de fixation A avec la roue et le pneu sous l'outil de démontage de la manière connue pour démonter le talon supérieur du pneu, pendant que le pneu roule sur les roulettes 6 du berceau 2. Pour le démontage du talon inférieur du pneu, on fait basculer à la main ou au pied le contre-poids 16 autour du pivot 15 jusqu'à ce que la butée réglable 18 soit en contact avec la glissière 14, de sorte que par le poids du contre-poids 16, la glissière 14 se déplace sous un angle par rapport à la tige de guidage 12 ce qui provoque un coinçage de cette tige dans le passage 13 de la glissière 14. Dans cette position la tige de guidage 12 ne peut être déplacée que vers le haut, de sorte que le berceau 2 avec le pneu ne puisse en aucun cas descendre et puisse être bloqué dans n'importe quelle position. Par l'intermédiaire du levier amovible 9, l'on fait basculer le berceau 2 de telle manière que les extrémités libres de ce berceau se déplacent vers le haut et que les roulettes 6 poussent le pneu vers le haut sur la roue fixée jusqu'à ce que le deuxième talon du pneu soit placé à une hauteur suffisante permettant le démontage de ce talon par l'outil de démontage. Pour écarter le pneu de l'appareil à monter, l'on fait basculer le berceau 2 vers sa position verticale initiale, de sorte que le pneu soit placé debout et puisse être roulé de la base 4 du berceau 2. Lorsque le berceau 2 a atteint presque sa position verticale extrême, le contre-poids 16 culbute automatiquement autour du pivot 15, par

0032759

- 6 -

son propre poids, de sorte qu'il s'écarte de la glissière 14, se met de nouveau dans sa position équilibrée, ce qui provoque le déblocage du berceau 2.

Il va de soi que les dimensions, la forme et la disposition relative des éléments décrits ci-dessus peuvent varier tout en restant dans le cadre de la présente invention. Il est tout aussi évident que certains de ces éléments pourraient être remplacés par d'autres qui poursuivraient le même but.

R E V E N D I C A T I O N S

1.- Dispositif pour la manipulation de roues et de pneus dans un appareil à monter et démonter les pneus, dispositif comportant un berceau basculant (2) supportant la roue et/ou le pneu et pouvant basculer entre une position verticale et horizontale, de sorte que la roue puisse être roulée sur le berceau et fixée dans sa position horizontale sur la tête de fixation (1) de l'appareil à monter et à démonter et d'un moyen pour le déplacement vertical vers le haut du pneu sur la roue afin de pouvoir démonter le talon inférieur du pneu au moyen de l'outil de démontage de l'appareil précité, caractérisé par le fait qu'il est prévu entre le berceau basculant (2) et la partie fixe (1) du dispositif, un moyen (11 à 18) permettant, en position du travail, le déplacement du berceau (2) de la position horizontale vers la position verticale mais empêchant le déplacement du berceau (2) vers la position horizontale et permettant, en non-position de travail du moyen précité (11 à 18), le déplacement du berceau (2) en deux directions opposées.

2.- Dispositif selonla revendication 1, caractérisé par le fait que le moyen prévu entre le berceau (2) et la partie fixe (1) du dispositif, consiste en une tige de guidage (12) dont une extrémité est suspendue à pivotement au berceau basculant (2) et l'autre extrémité passe à ajustage coulissant dans un passage (13) d'une glissière (14) suspendue à pivotement à la partie fixe (1) du dispositif pour la manipulation de roues et de pneus et en un moyen (15 à 18) à l'obtention d'un déplacement angulaire entre la glissière (14) et la tige de guidage (12) afin d'obtenir le coinçage de celle-ci dans la glissière.

3.- Dispositif selon la revendication 1, caractérisé par le fait que le moyen à l'obtention d'un déplacement angulaire entre la glissière (14) et la tige de guidage (12) consiste en un contrepoids (16) suspendu au pivot (15) de la glissière (14), contrepoids exercant d'une part une pression sur la glissière (14) lorsqu'il est basculé en direction de celle-ci afin de coincer cette glissière (14) sur la tige de guidage (12) et permettant d'autre part un déplacement libre de la tige de guidage (12) et du berceau (2) en deux directions opposées, lorsqu'il est basculé en direction opposée.

Fig.1

Fig.2

*Fig.3*

*Fig.4*

*Fig.5*